(19) Europäisches Patentamt
European Patent Office
Office européen des brevets

(11) **EP 2 623 952 B1**

(12) **EUROPÄISCHE PATENTSCHRIFT**

(45) Veröffentlichungstag und Bekanntmachung des Hinweises auf die Patenterteilung:
**29.05.2019 Patentblatt 2019/22**

(21) Anmeldenummer: **13153673.2**

(22) Anmeldetag: **01.02.2013**

(51) Int Cl.:
*G01N 3/06* (2006.01)    *G01B 11/02* (2006.01)
*G01B 21/02* (2006.01)    *G01N 21/88* (2006.01)
*G01B 9/02* (2006.01)

(54) **Verfahren und Vorrichtung zur Erkennung von Oberflächenrissen**

Method and device for detecting surface cracks

Procédé et dispositif de détection de fissures en surface

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2012 DE 102012002127**

(43) Veröffentlichungstag der Anmeldung:
**07.08.2013 Patentblatt 2013/32**

(73) Patentinhaber: **Pabst, Hartmut**
**07318 Saalfeld (DE)**

(72) Erfinder:
• **Pabst, Hartmut**
**07318 Saalfeld (DE)**
• **Pabst, Christian**
**07318 Saalfeld (DE)**

(74) Vertreter: **Kruspig, Volkmar et al**
**Meissner Bolte Patentanwälte**
**Rechtsanwälte Partnerschaft mbB**
**Berliner Straße 1**
**07545 Gera (DE)**

(56) Entgegenhaltungen:
**EP-A2- 2 216 644      BE-A1- 898 461**
**JP-A- H09 210 634     JP-A- 2005 300 363**
**US-B1- 7 538 891**

## Beschreibung

Die Erfindung betrifft ein Verfahren zur Erkennung von Oberflächenrissen nach Anspruch 1 und eine Vorrichtung zur Erkennung von Oberflächenrissen nach Anspruch 9.

Zur Erkennung von Oberflächenrissen, insbesondere von derartigen Rissen in verformten Blechteilen und anderen Werkstücken, sind aus dem Stand der Technik eine Vielzahl unterschiedlicher Verfahren bekannt.

Bei einem Magnetpulververfahren wird die zu prüfende Oberfläche mit einem ferromagnetischen Pulver bestreut. Das zu der Oberfläche gehörende Werkstück wird danach einem magnetischen Fluss ausgesetzt. Dabei treten die Feldlinien an den vorhandenen Oberflächenrissen aus dem Werkstück heraus und hinterlassen in der Pulverbedeckung charakteristische Spuren. Dieses Verfahren ist jedoch nur bei ferromagnetischen Werkstücken und Oberflächenmaterialien anwendbar, die mit dem Verfahren realisierbare Taktzeit beträgt mindestens 10 Sekunden und ist damit sehr oft zu groß. Weiterhin ist das Magnetpulver ein vergleichsweise kostspieliges Verbrauchsmaterial, wobei nach der Rissprüfung die Oberfläche gereinigt werden muss. Zudem ist die optische Auswertung der Magnetpulverlinien aufwändig.

Bei einem Farbeindringverfahren wird die zu prüfende Oberfläche entweder mit einem Farbstoff bedeckt oder in ein Farbbad getaucht. Der Farbstoff dringt in vorhandene Oberflächenrisse ein. Nach einem Reinigungsschritt der Oberfläche zeichnet sich der in die Risse eingedrungene Farbstoff in Form von erkennbaren Spuren auf der Oberfläche ab. Dieses Verfahren ist mit einer Verfahrensdauer von mehr als 10 Minuten äußerst zeitintensiv und für eine Massenfertigung oder Schnellprüfung nicht geeignet.

Bei einem Wirbelstromverfahren wird in der zu prüfenden Oberfläche durch ein Spulensystem ein Wirbelstrom induziert. Dabei werden die Wirbelstrombahnen durch Fehlstellen auf der Oberfläche, insbesondere Risse, gestört. Dies führt zu einer nachweisbaren Abweichung des Induktionsverhaltens und kann somit zu einer Rissdetektion verwendet werden. Mit diesem Verfahren lassen sich zwar geringe Taktzeiten erreichen, allerdings ist es praktisch nicht möglich, Risse von anderen Oberflächenstörungen, insbesondere Erhebungen, eindeutig zu unterscheiden. Gekrümmte Oberflächen lassen sich nur sehr problematisch untersuchen, weil die Oberflächenkrümmung einen empfindlichen und nicht leicht zu berechnenden Einfluss auf das Wirbelstrombild ausübt. Das Verfahren ist überdies nur sehr lokal anwendbar und ist daher im Wesentlichen auf die Überprüfung von Schweißnähten beschränkt.

Bei einer Durchstrahlung der zu prüfenden Oberfläche wird Röntgenstrahlung oder Gammastrahlung aus einer Quelle durch das zu prüfende Werkstück gestrahlt. Auf einer Projektionsfläche, die in der Regel ein Film, eine Fotoplatte oder ein Array ist, zeichnet sich dann ein Durchstrahlungsbild des Werkstückes ab. Mit einem derartigen Verfahren können nur vollständige Durchrisse im Werkstück erkannt werden. Oberflächenrisse zeichnen sich nicht zuverlässig im Projektionsbild ab. Das Verfahren gewährleistet zwar eine schnelle Prüfzeit, allerdings kann die Präzision der Durchstrahlung, d.h. dessen Auflösung, praktisch nicht gesteigert werden, weil die Durchstrahlung ein reines Projektionsverfahren ist. Außerdem sind umfangreiche Strahlenschutzvorkehrungen notwendig.

Bei einer akustischen Risserkennung wird das zu prüfende Werkstück mit Schallwellen beaufschlagt. Dabei werden Schwingungsmoden angeregt, die den Eigenfrequenzen des Werkstückes entsprechen, sodass das Werkstück möglichst in Resonanz mit einer äußeren Schallquelle gebracht wird. Die Schwingungsmoden und Eigenfrequenzen hängen dabei im Wesentlichen von der Form des Werkstückes ab. Risse können über gestörte Eigenschwingungen des Werkstückes im Rahmen einer Frequenzanalyse auch richtungsabhängig detektiert werden. Es lassen sich zwar geringe Taktzeiten erreichen, allerdings wirken sich Umgebungsgeräusche nachteilig auf den Detektionsprozess aus. Eine oft aufwändige und daher kostenintensive Schallisolierung der Detektionsvorrichtung ist für eine möglichst genaue Rissdetektion daher erforderlich.

Bei einer Risserkennung mittels Ultraschall wird über einen Sensorprüfkopf Ultraschall in das zu prüfende Werkstück eingekoppelt. Risse zeigen sich als Störungen des sich ausbreitenden Ultraschallsignals und interne Reflexionen im Körper des Werkstückes. Das Verfahren wird häufig angewendet, erfordert jedoch eine zum Teil sehr kostenintensive Messanordnung.

Zur Risserkennung sind auch thermographische Verfahren bekannt. Das zu prüfende Werkstück wird thermisch, insbesondere mittels Ultraschall, angeregt. Risse und sonstige Unebenheiten führen dabei zu besonderen Wärmeentwicklungen, die mittels einer Thermokamera im infraroten Spektralbereich detektiert werden können. Dieses Verfahren ist gerätetechnisch aufwändig, es erfordert eine genaue Abstimmung aus einer Ultraschallanordnung und einer Thermokamera und daher entsprechendes Fachwissen.

Aus den vorhergehenden Erläuterungen ergibt sich somit die Aufgabe, eine kostengünstige Möglichkeit zur Erkennung von Oberflächenrissen anzugeben, wobei die Risserkennung unabhängig von der Form der Oberfläche und von der Art des Werkstoffes zuverlässig erfolgen kann. Weiterhin soll die Risserkennung sowohl auf größeren Oberflächenabschnitten als auch lokal ausführbar sein, wobei dabei die Genauigkeit adaptiv einstellbar gestaltbar sein soll. Die Risserkennung soll mit möglichst kurzen Taktzeiten ausführbar und hinreichend robust gegenüber Störungen sein. Die Risserkennung soll möglichst einfach und mit einem minimalen Geräteaufwand ausführbar sein und zu eindeutigen Ergebnissen führen.

Die Aufgabe wird hinsichtlich ihres Verfahrensaspektes mit einem Verfahren zur Erkennung von Oberflächenrissen mit den Merkmalen des Anspruchs 1 gelöst. Hinsichtlich ihres Vorrichtungsaspektes erfolgt die Lösung der Aufgabe mit einer Vorrichtung zur Erkennung von Oberflächenrissen mit den Merkmalen des Anspruchs 9.

Ein Verfahren zur Erkennung von Oberflächenrissen ist in EP 2 216 644 A2 offenbart.

Das Verfahren zur Erkennung von Oberflächenrissen wird durch Anwendung einer differenziellen Oberflächenabtastung ausgeführt. Es kommen folgende Verfahrensschritte zur Ausführung:
In einem ersten Schritt erfolgt ein Ermitteln mindestens eines ersten Abstandssignals zwischen einer Detektorvorrichtung und einer abgetasteten Oberfläche an mindestens einem ersten Messpunkt. In einem zweiten Schritt wird mindestens ein zweites Abstandssignal zwischen der Detektorvorrichtung und der abgetasteten Oberfläche an mindestens einem zweiten Messpunkt ermittelt. In einem dritten Schritt wird mindestens ein ortsabhängiger Vergleichswert zwischen dem ersten Abstandssignal und dem zweiten Abstandssignal in Abhängigkeit von den Ortskoordinaten des ersten und/oder zweiten Messpunktes bestimmt, wobei eine Unstetigkeit und/oder eine Singularität des ortsabhängigen Vergleichswertes zur Rissdetektion ermittelt wird.

Das Verfahren wird somit als eine kontinuierlich ablaufende Zweipunktmessung ausgeführt, wobei nur Vergleichswerte zwischen zwei aufeinander folgenden Messpunkten ermittelt werden. Die Rissdetektion erfolgt somit lokal, eine Gesamtaufnahme der Oberfläche und eine nachfolgende Analyse des Oberflächenbildes auf Risse entfällt. Dadurch können die Messdaten mit einer hohen Geschwindigkeit ermittelt und auf eine sehr einfache Weise verarbeitet werden. Risse werden dadurch sehr schnell detektiert.

Erfindungsgemäß wird eine Menge der ortsabhängigen Vergleichswerte erzeugt, wobei aus dieser Menge ein differenzielles Oberflächenprofil erzeugt wird und das differenzielle Oberflächenprofil auf Unstetigkeiten und/oder Singularitäten getestet wird.

Das dabei gewonnene differenzielle Oberflächenprofil enthält zum einen Informationen über die lokale Struktur der abgetasteten Oberfläche und ist zum anderen eine Darstellung der Oberfläche in ihrer Gesamtheit. Die differenzielle Abtastung geschieht so, dass von einem Detektor punktweise die Oberflächenstruktur abgescannt und als ein Abstandssignal ermittelt wird. Bei dem darauf folgenden Abtastpunkt wird dann die Veränderung des Abstandssignal in Bezug auf den Abstandswert am vorherigen Abtastpunkt in Form eines Vergleichswertes zwischen dem ersten und dem zweiten Abstandssignal bestimmt. Damit wird somit eine lokale Eigenschaft der Oberfläche, genauer gesagt, deren Änderung in einer Umgebung der jeweiligen Abtastpunkte ermittelt. Weil dies für alle Punkte auf der Oberfläche oder zumindest in einer bestimmten Scanrichtung erfolgt, liegt nach dem Abschluss des Abtastvorgangs ein differenzielles Oberflächenprofil zumindest entlang einer Scanrichtung vor.

Das differenzielle Oberflächenprofil ist besonders aussagekräftig. Durch die differenzielle Art der Abtastung zeigen sich eng begrenzte, aber relativ starke Änderungen in der Oberflächenstruktur, wie sie im Falle eines Oberflächenrisses vorliegen, besonders deutlich in Form von Unstetigkeiten oder Singularitäten im Verlauf des differenziellen Oberflächenprofils. Weit ausgedehnte Änderungen der Oberflächenstruktur, wie zum Beispiel größere Krümmungen oder Biegungen der Oberfläche mit hinreichend großen Radien fallen praktisch unter die Nachweisgrenze und werden somit für die Beurteilung der Qualität der gescannten Oberfläche nicht berücksichtigt und ausselektiert. Das Verfahren lässt sich mit einer hohen Geschwindigkeit ausführen, wobei eine Zwischenspeicherung aller Messwerte an sich nicht notwendig ist und ein bloßer Vergleich beliebig aufeinander folgender Abstandssignale genügt.

Erfindungsgemäß wird eine Menge ortsabhängiger Vergleichswerte erzeugt, wobei aus der Menge der ortsabhängigen Vergleichswerte ein differenzielles Oberflächenprofil erzeugt wird. In dem differenziellen Oberflächenprofil werden Unstetigkeiten und/oder Singularitäten ermittelt, wobei zur Unterscheidung eines Risses von anderen Oberflächeninhomogenitäten, insbesondere einem Grat und/oder einem Graben, die Lage und Form von lokalen Maxima und Minima und die Abfolge zwischen lokalen Maxima und Minima im Bereich der jeweils ermittelten Unstetigkeit und/oder Singularität innerhalb des differenziellen Oberflächenprofils ermittelt und verwendet wird.

Zur Ermittlung der Abstandssignale kann auf verschiedene Messverfahren zurückgegriffen werden. Bei einer ersten Ausführungsform wird das erste und/oder das zweite Abstandssignal durch eine optische und/oder elektromagnetische Abstandsmessung ermittelt. Bei der optischen Abstandsmessung wird auf sichtbares Licht, aber auch auf infrarote und ultraviolette Strahlung zurückgegriffen. Möglich ist aber auch die Verwendung von Mikrowellen oder Radiowellen im Sinne einer lokalen Radarmessung.

Bei einer weiteren Ausführungsform des Verfahrens kann das erste und/oder das zweite Abstandssignal durch eine akustische Abstandsmessung ermittelt werden. Beide Arten der Abstandsmessung können somit kombiniert vorgenommen werden, aber auch alternativ angewendet werden.

In Ergänzung oder alternativ zu den vorgenannten Methoden der Bestimmung der Abstandssignale können das erste und/oder das zweite Abstandssignal auch durch eine mechanische Abstandsmessung ermittelt werden.

Als ortsabhängiger Vergleichswert zwischen beiden Abstandssignalen können alle Werte genutzt werden, in denen sich die Änderungen zwischen den Abstandssignalen mathematisch besonders deutlich zeigen. Insbesondere kann als ortsabhängiger Vergleichswert ein ortsabhängiger Differenzwert und/oder ein ortsabhängiger Verhältniswert bestimmt werden.

Zweckmäßigerweise wird die erste und die zweite Ortskoordinate sowie weitere Ortskoordinaten durch eine mittels einer Verschiebemechanik ausgeführte Relativverschiebung zwischen der abgetasteten Oberfläche und der Detektorvorrichtung eingestellt. Dabei führt die Detektorvorrichtung eine punktweise Abtastung aus.

Bei einer weiteren zweckmäßigen Ausführung wird die erste und die zweite Ortskoordinate sowie weitere Ortskoordinaten über eine der abgetasteten Oberfläche gegenüber befindliche Detektorvorrichtung in Form einer linearen oder flächigen Detektormatrix eingestellt. Dabei führt die Detektormatrix mehrere punktweise Abtastungen gleichzeitig aus. Es lassen sich dadurch mehrere Punkte gleichzeitig erfassen, wodurch der Abtastvorgang zeitlich verkürzt werden kann.

Eine Vorrichtung zur Erkennung von Oberflächenrissen, umfasst Mittel für eine differenzielle Oberflächenabtastung mit folgenden Komponenten:

Vorgesehen ist eine punktweise arbeitende Abstandsmessvorrichtung zum Bestimmen von ortsabhängigen Abstandssignalen, eine mit der Abstandsmessvorrichtung oder der Oberfläche gekoppelte Verschiebevorrichtung zum Anfahren diskreter und benachbarter Messpunkte auf der Oberfläche, eine Vergleichseinheit zum Ermitteln eines Vergleichswertes zwischen einem ersten ortsabhängigen Abstandswert und einem zweiten ortsabhängigen Abstandswert bei zwei gegebenen Messpunkten, eine Datenverarbeitungseinheit zum Ermitteln einer Unstetigkeit und/oder einer Singularität des ermittelten Vergleichswertes.

Erfindungsgemäß wird zur Erkennung von Oberflächenrissen ein weiterer Bestandteil durch eine Speichereinheit gebildet. Diese dient zum Speichern der ortsabhängigen Abstandswerte, der Vergleichswerte und der Ortskoordinaten und zum Erzeugen eines differenziellen Oberflächenprofils.

Erfindungsgemäß sind die Datenverarbeitungseinheit und die Speichereinheit zur Unterscheidung eines Risses von anderen Oberflächeninhomogenitäten so konfiguriert, dass die Lage und Form von lokalen Maxima und Minima und die Abfolge zwischen lokalen Maxima und Minima im Bereich der jeweils ermittelten Unstetigkeit und/oder Singularität innerhalb des differenziellen Oberflächenprofils ermittelt und verwendet wird.

Die punktweise Abstandsmessvorrichtung ist bei einer Ausführungsform in Form einer linearen oder flächenhaften Matrix aus einzelnen gleichzeitig messenden Abstandsmesseinheiten ausgebildet. Es lassen sich damit mehrere Messwerte gleichzeitig erfassen und der Scanvorgang der gesamten Oberfläche wird dadurch zeitlich verkürzt.

Die punktweise Abstandsmessvorrichtung ist eine optische, eine akustische und/oder eine mechanische Abstandsmessvorrichtung.

Das erfindungsgemäße Verfahren und die erfindungsgemäße Vorrichtung sollen nachfolgend anhand von Ausführungsbeispielen näher erläutert werden. Zur Verdeutlichung dienen die Figuren 1 bis 7. Es werden für gleiche und vergleichbare Teile dieselben Bezugszeichen verwendet.

Es zeigt:

Fig. 1 eine Darstellung einer beispielhaften erfindungsgemäßen Vorrichtung in einer ersten Ausführungsform,

Fig. 2 eine Darstellung einer beispielhaften erfindungsgemäßen Vorrichtung in einer zweiten Ausführungsform,

Fig. 3 eine Darstellung einer beispielhaften erfindungsgemäßen Vorrichtung in einer dritten Ausführungsform,

Fig. 4 ein beispielhafter Oberflächenriss mit einem entsprechenden differenziellen Oberflächenprofil,

Fig. 5 eine beispielhafte spitze Oberflächenerhebung in Form eines Grates mit einem entsprechenden differenziellen Oberflächenprofil,

Fig. 6 eine oberflächliche Kante mit einem entsprechenden differenziellen Oberflächenprofil und ein breiter oberflächlicher Graben mit einem entsprechenden differenziellen Oberflächenprofil,

Fig. 7 eine flache oberflächliche Grube mit einem entsprechenden differenziellen Oberflächenprofil.

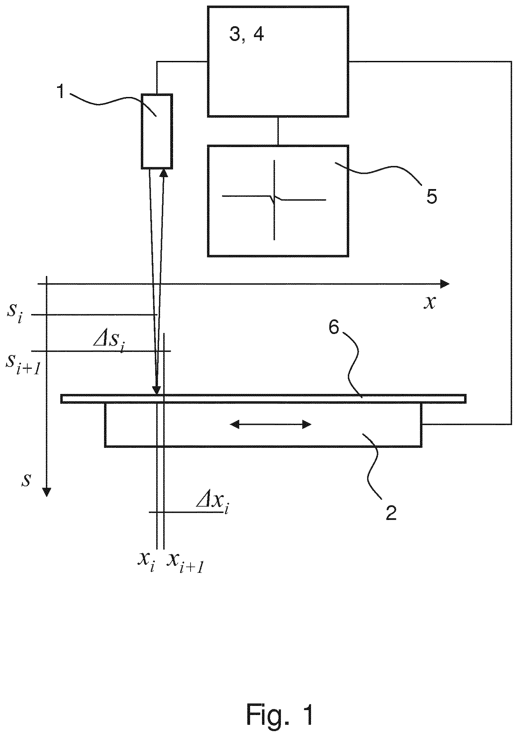

Fig. 1 zeigt eine erste beispielhafte Vorrichtung zum Ausführen der Oberflächenrisserkennung. Die Vorrichtung umfasst eine punktweise arbeitende Abstandsmessvorrichtung 1. Diese führt eine punktweise Abstandsmessung an einem Werkstück mit einer zu prüfenden Oberfläche 6 aus. In einer ersten Ausführungsform ist nur eine punktweise Abstandsmessvorrichtung vorgesehen, die außerdem berührungslos arbeitet. Die berührungslose Abstandsmessung erfolgt hierbei entweder optisch oder akustisch. Bei einer optischen Abstandsmessung enthält die Abstandsmessvorrichtung eine gut fokussierbare Lichtquelle, insbesondere einen Laser, dessen Strahlrichtung zur Oberfläche 6 zeigt. Das von der Oberfläche reflektierte Licht trifft auf eine ebenfalls in der Abstandsmessvorrichtung angeordnete Empfängervorrichtung.

Die optische Abstandsmessung kann auf die dafür übliche Weise erfolgen. Möglich ist dabei insbesondere eine Laufzeitmessung des ausgesandten und reflektierten Laserlichtes. Hierzu wird durch eine Triggerschaltung ein Laserimpuls freigesetzt und gleichzeitig eine Zeitmesseinrichtung gestartet. Sobald der von der Oberfläche reflektierte Laserimpuls auf den Detektor trifft, wird die Zeitmesseinrichtung gestoppt. Zusammen mit der bekannten Lichtgeschwindigkeit kann damit der Abstand zwischen der Oberfläche 6 und der Abstandsmesseinrichtung absolut bestimmt werden.

Die optische Abstandsmessung kann auch auf interferometrischem Wege erfolgen. Hierbei ist der Abstand zwischen der Abstandsmessvorrichtung 1 und der zu prüfenden Oberfläche 6 vorgegeben. Gemessen wird in einem derartigen Fall die Verschiebung der Phasenlage des in den Detektor fallenden reflektierten Lichtes. Eine derartige Messung kann beispielsweise dadurch erfolgen, indem ein in der Abstandsmessvorrichtung vorgesehener Strahlteiler das aus der Laserquelle emittierte Licht in zwei Einzelstrahlen teilt. Einer der beiden Strahlen wird auf die Oberfläche 6 gerichtet und von dort zum Detektor reflektiert. Der andere Strahl wird direkt auf den Detektor gelenkt und interferiert dort mit dem von der Oberfläche reflektierten Strahl. Beide Teilstrahlen unterliegen dabei einem Gangunterschied. Dieser führt dazu, dass beide Teilstrahlen am Detektor einer konstruktiven oder destruktiven Interferenz unterliegen. Ein Vorteil dieser interferometrischen Methode besteht darin, dass dabei nicht der absolute Abstand zwischen Abstandsmessvorrichtung und Oberfläche bestimmt werden muss, sondern dass die eigentlich interessante Änderung des absoluten Abstandes sofort in Form des am Detektor anfallenden Interferenzsignals abgegriffen werden kann.

Eine akustisch arbeitende Abstandsmessvorrichtung beruht prinzipiell auf einer dazu analogen Anwendung der Laufzeitmethode bzw. der interferometrischen Methode im Bereich der Schallausbreitung. In diesem Fall enthält die Abstandsmessvorrichtung eine Schallquelle, die eine fokussierte Schallwelle auf die Oberfläche 6 abstrahlt. Zur Schalldetektion dient ein in der Abstandsmessvorrichtung angeordnetes Mikrofon. Für eine absolute Abstandsmessung wird die Schallwelle in Form von Pulsen auf die Oberfläche 6 abgestrahlt. In einer dem oben erläuterten optischen Messverfahren entsprechenden Weise wird die Laufzeit des Schallimpulses gemessen und bei bekannter Schallgeschwindigkeit der Abstand zwischen Abstandsmessvorrichtung und Oberfläche absolut bestimmt.

Die Größe des Messpunktes hat einen wesentlichen Einfluss auf die Genauigkeit des differenziellen Verfahrens. Im allgemeinen stellt der Messwert eine Mittelwertbildung über den Messfleck dar.

Das Scannen der Oberfläche 6 erfolgt durch eine Relativbewegung zwischen der Abstandsmessvorrichtung und der Oberfläche. Hierzu ist mindestens eine der beiden Komponenten verschiebbar ausgebildet. Im hier vorliegenden Fall ist die zu prüfende Oberfläche 6 auf eine Verschiebevorrichtung 2 aufgelegt, die hier als ein Tisch mit einem Linear- oder Planarantrieb ausgebildet ist. Dieser erlaubt sowohl kontinuierliche als auch Schrittbewegungen und weist Mittel zum Detektieren des Verschiebeweges auf.

Grundsätzlich werden zur eigentlichen Risserkennung und bei zeitkonstanter Abtastung nur zwei Messwerte und zwei Positionswerte benötigt und schon während des Scanvorgangs verglichen, sodass ein Riss sofort detektiert wird. Es müssen grundsätzlich also keine Daten gesammelt, als Gesamtheit gespeichert und anschließend ausgewertet werden. Die gesamte Risserkennung erfolgt somit sehr schnell und unmittelbar während des Abscannens der Oberfläche.

Das ganze nachfolgend beschriebene Verfahren kann also mit einem Minimum an Komponenten, insbesondere ohne eigentliche Speichereinheit, ausgeführt werden. Die Speichereinheit kann allerdings sinnvoll sein, wenn das differenzielle Oberflächenprofil entlang eines Messweges oder über einem vollständig abzuscannenden Oberflächenausschnitt aufgezeichnet und nachfolgend näher analysiert werden soll.

Im allgemeinen liegen einer Rissdetektion zwei Abstandssignale $Z_n$ und $Z_{n+1}$ zugrunde. Es muss dabei im Prinzip nicht der tatsächliche Abstand in Form einer Länge oder Tiefe bestimmt werden. Es genügt bereits, dass das von der Abstandsmessvorrichtung gelieferte Abstandssignal hinreichend sensitiv auf Oberflächeninhomogenitäten auf der Oberfläche reagiert. Diese werden an zwei Punkten $P_n$ und $P_{n+1}$ auf der Oberfläche gemessen. Beide Punkte weisen in einem durch die Vorrichtung definierten XY-Koordinatensystem die Ortskoordinaten $P_n = (X_n; Y_n)$ und $P_{n+1} = (X_{n+1}; Y_{n+1})$ auf. Der laterale Abstand $L_n$ zwischen den Punkten $P_n$ und $P_{n+1}$ ergibt sich einfach durch eine Normbildung:

$$L_n = \left\| (X_{n+1}; Y_{n+1}) - (X_n; Y_n) \right\| = \sqrt{(X_{n+1} - X_n)^2 + (Y_{n+1} - Y_n)^2} \, ,$$

wobei hier zweckmäßigerweise auf eine euklidische Norm unter Verwendung des Satzes des Pythagoras zurückgegriffen wird. Zur Risserkennung wird die Stetigkeit der registrierten Abstandssignale detektiert. Hierzu wird ein Stetigkeitsmaß $M_n$ bestimmt, das sich beispielsweis zu $M_n = (Z_{n+1} - Z_n)/L_n$ bestimmt. Bei einer hinreichend glatten Oberfläche ist $M_n \sim 0$, das Abstandssignal ist also praktisch unabhängig von der Lage des Messpunktes. Bei einem Riss ändert sich hingegen das Abstandssignal Z bei fortlaufenden Messpunkten stark und das Stetigkeitsmaß $M_n$ nimmt einen von Null verschiedenen Wert an.

Dabei ist es grundsätzlich nicht notwendig, die entsprechenden Messpunkte auf der Oberfläche einzeln gezielt anzufahren und auszumessen. Es genügt, die Oberfläche oder die Abstandsmessvorrichtung mit einer konstanten Geschwindigkeit zu verfahren und die Abstandsmessung dabei kontinuierlich auszuführen. Unter diesen Bedingungen generiert die Abstandsmessvorrichtung ein kontinuierliches Abstandssignal, beispielsweise einen kontinuierlichen Stromstärke- oder Spannungswert, das sich während des Verfahrens über die Oberfläche ändert. Dieses Messsignal wird differenziert. Dies kann in einem nachgeschalteten Differenzierglied, zum Beispiel mit einem Hochpass, erfolgen. Die dabei auftretenden Unstetigkeiten und Sprünge im differenzierten Messsignal können mit einer Filterschaltung, insbesondere einer Schwellwertschaltung, ausgefiltert werden. Dabei wird eine Oberflächeninhomogenität dann als detektiert gewertet, wenn das aktuelle Stetigkeitsmaß $M_n$ einen vorab definierten Wert $M_0$ überschreitet.

Risse zeigen sich bei einem derartigen Messverlauf durch einen quasi singulären Wert des Stetigkeitsmaßes, da in einem derartigen Fall im allgemeinen $Z_{n+1} \gg Z_n$ ist und der Abstandswert innerhalb einer kurzen Wegstrecke eine starke Änderung erfährt. Anrisse zeigen sich durch ein Vielfaches von $M_n$ zu $M_0$ bzw. zu $M_1$.

Die Generierung des differenziellen Oberflächenprofils kann aber auch wie im Folgenden beschrieben ausgeführt werden. Dabei wird eine Zwischenspeicherung der Daten ausgeführt und zumindest entlang einer Scanlinie eine Bildgebung erreicht. Vereinfacht wird nachfolgend davon ausgegangen, dass die Scanrichtung mit der x-Achse eines gegebenen Koordinatensystems identisch ist.

Bei dem in Fig. 1 vorliegenden Beispiel gibt die Abstandsmessvorrichtung 1 die ermittelten Messsignale an eine Speichereinheit 3 aus, die im hier gezeigten Beispiel mit einer Datenverarbeitungseinheit 4 vereinigt ist. Die Kombination aus Speichereinheit und Datenverarbeitungseinheit ist zweckmäßigerweise als ein Rechner, ein Microcontroller oder eine vergleichbare Komponente zur Datenverarbeitung ausgebildet. Zusätzlich wird durch den Rechner auch die Bewegung der Verschiebevorrichtung 2 gesteuert. Die Datenverarbeitungseinheit und die Speichereinheit registriert somit zum einen die von der Abstandsmessvorrichtung 2 gelieferten Abstandsmessignale und somit die Abstandswerte, als auch die aktuelle Position der Verschiebevorrichtung und ordnet beide Daten einander zu. Die Datenverarbeitungseinheit 4 errechnet ein differenzielles Oberflächenprofil, das in einer Anzeigeeinheit 5 dargestellt wird oder weiter analysiert werden kann. Es ist einsichtig, dass sämtliche Komponenten in einem gemeinsamen Gerät vereinigt sein können.

In dem in der Figur gezeigten Beispiel wird die zu prüfende Oberfläche in Richtung der hier eingezeichneten x-Achse verschoben. Die Verschiebung erfolgt hier beispielsweise nach links, sodass die Oberfläche im Ergebnis von links nach rechts abgescannt wird. Die Oberfläche wird dabei punktweise erfasst. Dies kann entweder so erfolgen, indem die Verschiebevorrichtung schrittweise bewegt wird, oder indem bei einer kontinuierlichen Bewegung der Verschiebevorrichtung die Abtastung der Oberfläche zeitgetaktet ausgeführt wird. In jedem Fall bilden die Ortskoordinaten $x_1, x_2, ... x_i, x_{i+1}, ... x_N$ der Messpunkte eine auf einer Scanrichtung liegende Folge, wobei i ein Zählindex und N die maximale Anzahl der Messpunkte auf der x-Koordinate ist. Vereinfacht wird angenommen, dass die Messpunkte äquidistant voneinander in einem Abstand $\bullet\, x_i = x_{i+1} - x_i$ beabstandet sind. Dann kann über die Zahl N und die Gesamtlänge des Abtastweges die gewünschte Ortsauflösung des Abtastvorgangs eingestellt werden. Da die Abstandsmessvorrichtung 1 einen Messfleck mit einer endlichen Größe auf der Oberfläche erfasst, wird die Ortsauflösung $\bullet\, x$ zweckmäßigerweise so gewählt, dass sie etwas größer als der Messfleck der Abstandsmessvorrichtung ist.

An jedem der Messpunkte $x_i$ erfolgt durch die Abstandsmessvorrichtung 1 eine Abstandsmessung. Der dabei ermittelte Messwert $s_i$ stellt somit den Abstand zwischen der Abstandsmesseinrichtung und der Oberfläche 6 dar. Er wird in der Speichereinheit 3 zwischengespeichert. Nach der Messung wird die Oberfläche 6 von dem Messpunkt $x_i$ zu dem Messpunkt $x_{i+1}$ verschoben. An diesem neuen Messpunkt erfolgt wiederum eine Abstandsmessung, die den Messwert $s_{i+1}$ liefert. Dieser Messwert wird ebenfalls der Speichereinheit 3 übergeben.

Anschließend wird in der Datenverarbeitungseinheit die Differenz $\bullet\, s_i = s_{i+1} - s_i$ errechnet und der Ortskoordinate $x_i$ zugeordnet.

Nach dieser Differenzbildung bewegt sich die Oberfläche 6 zu einer weiteren Ortskoordinate $x_{i+2}$. Dort wird ein Messwert $s_{i+2}$ bestimmt und eine erneute Differenzbildung $\bullet\, s_{i+1} = s_{i+2} - s_{i+1}$ vorgenommen. Der erneute Differenzwert $\bullet\, s_{i+1}$ wird der Ortskoordinate $x_{i+1}$ zugeordnet. Danach bewegt sich die Oberfläche zum nächsten Messpunkt und der beschriebene Vorgang wiederholt sich. Im Ergebnis entsteht somit eine Folge von Differenzmesswerten, die den einzelnen Ortskoordinaten zugeordnet werden. Diese Folge bildet das differenzielle Oberflächenprofil der Oberfläche 6 in der Scanrichtung x.

Prinzipiell erfolgt somit ein Vergleich jeweils aufeinander folgender Abstandsmesswerte, wobei ein Vergleichsparameter gewonnen wird. Dieser Vergleichsparameter ist im hier erläuterten Beispiel eine einfache Differenz. Die Differenz genügt hier, sofern die einzelnen Messpunkte $x_i$ äquidistant aufeinander folgen. Bei einer nicht äquidistanten Folge der Messpunkte ist es zweckmäßiger, den Vergleichsparameter in Form von Differenzenquotienten anzugeben und somit $\bullet\, s_i / \bullet\, x_i = (s_{i+1} - s_i)/(x_{i+1} - x_i)$ zu berechnen.

Der Vergleichsparameter kann auf eine grundsätzlich beliebige andere Weise definiert sein, sofern sich daraus genügend deutlich ein Unterschied zwischen den aufeinanderfolgenden Abstandsmesswerten ableiten lässt. Möglich sind demnach beispielsweise auch Quotientenbildungen zwischen den aufeinander folgenden Abstandsmesswerten $s_i$ und $s_{i+1}$ bei äquidistanten Messpunkten.

Die hier dargestellte Abtastung der Oberfläche kann auch zweidimensional ausgeführt werden, wobei der gewählte Oberflächenbereich zeilenweise abgescannt wird. Das Scannen kann in der Hin- und der Rückbewegung der Verschiebevorrichtung erfolgen. Die Differenzbildung muss dabei angepasst werden, damit es nicht zu einem Vorzeichenwechsel in der Differenz und somit zu einem unbeabsichtigten Artefakt kommt.

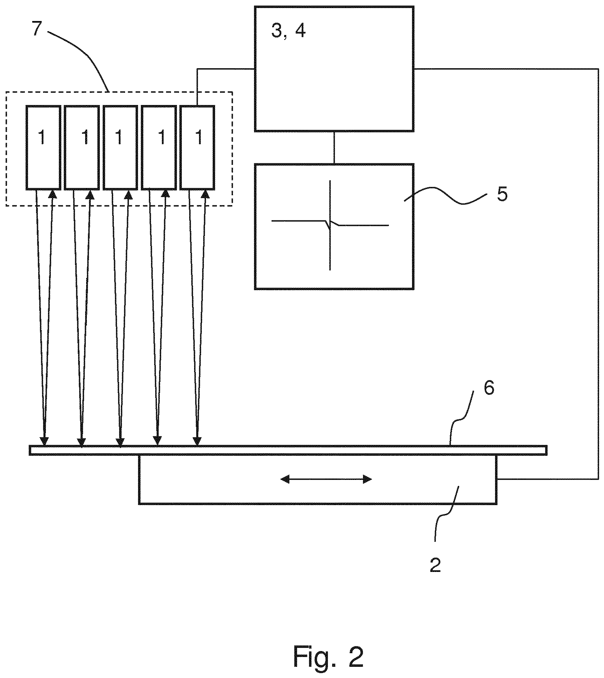

Fig. 2 zeigt eine weitere Scanmethode für die Oberfläche 6. Die hier gezeigte Konfiguration entspricht im wesentlichen dem Ausführungsbeispiel aus Fig. 1. Jedoch sind bei dem hier vorliegenden Beispiel mehrere Abstandsmessvorrichtungen 1 zu einer linearen Matrix 7 aus hier fünf Einzelvorrichtungen zusammengefasst. Diese erfasst mehrere Messpunkte gleichzeitig. Über eine entsprechend angepasste Verschiebesteuerung lassen sich somit gleichzeitig fünf Messpunkte erfassen. Die Feinheit der Ortsauflösung lässt sich durch eine Abstimmung der Schrittweite der Verschiebevorrichtung 6 auf die Abstände der einzelnen Abstandsmessvorrichtungen innerhalb der Matrix 7 und eine entsprechend angepasste Verarbeitung der anfallenden Mess- und Ortsdaten innerhalb der Datenverarbeitungseinrichtung einstellen.

In einer dazu entsprechenden Weise können auch zweidimensionale Anordnung einzelner Abstandsmessvorrichtungen in Form eines Arrays vorgesehen sein, die schließlich ein differenzielles zweidimensionales Oberflächenprofil erstellen.

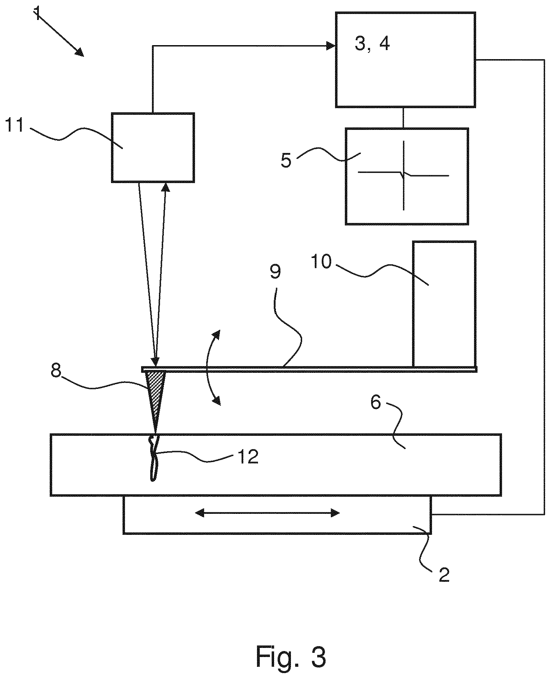

Fig. 3 zeigt eine weitere Ausführungsform der Abstandsmesseinrichtung. Bei dem hier gezeigten Beispiel handelt es sich um eine mechanisch-optische Abstandsmesseinrichtung. Bei dieser Ausführungsform wird die Oberfläche 6 mit einer Spitze 8 abgetastet. Diese befindet sich am Ende einer Blattfeder 9, die die Spitze 8 mit einer gewissen Druckkraft auf die Oberfläche drückt. Eine Absenkmechanik 10 gewährleistet ein hinreichend sanftes Aufsetzen der Anordnung aus Blattfeder und Spitze. Eine optische Detektorvorrichtung 11 strahlt Licht, insbesondere Laserlicht, auf die Oberseite des Blattfederendes und detektiert das von dort reflektierte Licht. Bei einem Riss 12 auf der Oberfläche 6 senkt sich die Spitze in den Riss ein. Dadurch verändert sich die Lage des Blattfederendes und somit die Intensität bzw. die Lage des Reflexionspunktes des von der Blattfeder reflektierten und in der Detektorvorrichtung empfangenen Lichtes. Es genügt bereits, diese Intensitätsänderung zu erfassen, ohne den Absolutbetrag des Abstandes zwischen dem Detektor und der Blattfederspitze zu kennen. Denn diese Intensitätsänderung ist ein Maß für die Größe der Durchbiegung der Blattfeder. Sie kann also direkt als Vergleichsparameter verarbeitet und in das differenzielle Oberflächenprofil übersetzt werden. Hierzu dienen wieder die Speichereinheit 3 und die Datenverarbeitungseinheit 4.

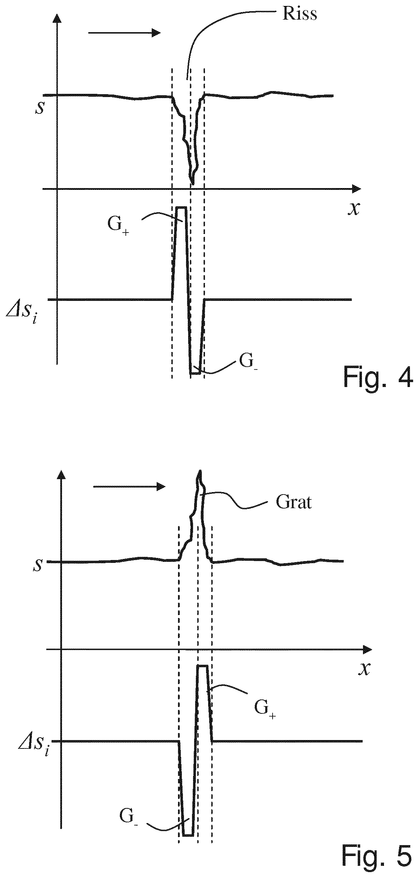

Fig. 4 zeigt einen beispielhaften Verlauf eines differenziellen Oberflächenprofils bei einem Riss, Fig. 5 im Vergleich dazu den Verlauf eines differenziellen Oberflächenprofils bei einem Oberflächengrat.

Bei den nachfolgenden Beispielen wird davon ausgegangen, dass wie bei den vorhergehenden Erläuterungen die Oberfläche von links nach rechts gescannt wird, wobei der zuerst gemessene und damit weiter links liegende Abstandswert $s_i$ von dem nachfolgend gemessenen und somit weiter rechts liegenden Wert $s_{i+1}$ abgezogen wird. Anstelle des Abstandswertes kann auch wie erwähnt jedes zum Abstand zwischen Oberfläche und Abstandsmesseinrichtung proportionale Messsignal verwendet werden.

Ein Riss zeichnet sich in seiner Form in der Regel dadurch aus, dass dieser in lateraler Richtung schmal, aber im Verhältnis dazu tief ist. Der Grund des Risses liegt dabei von einer darüber befindlichen Detektorvorrichtung weiter entfernt, als der übrige Teil der sonst ungestörten Oberfläche. Über der ansonsten glatten ungestörten Oberfläche ändert sich s bei hinreichend dicht nebeneinander liegenden Messpunkten praktisch nicht, • $s_i$ ist dort im wesentlichen gleich Null. Das ändert sich im Bereich des Risses. Bei einem Scanvorgang von links nach rechts ist daher $s_{i+1} > s_i$ und somit • $s_i = s_{i+1} - s_i > 0$. An der linken Flanke des Risses findet sich somit im differenziellen Oberflächenprofil ein scharfes Maximum $G_+$. An der rechten Flanke des Risses wird wieder das ursprüngliche Niveau der ungestörten Oberfläche erreicht, dort gilt somit • $s_i = s_{i+1} - s_i < 0$, denn der Abstand zwischen Detektor und Oberfläche verringert sich wieder nach dem Durchlaufen des Risses. Im differenziellen Oberflächenprofil zeigt sich dies als ein scharfes Minimum G. Charakteristisch für einen Riss ist der unstetige, sprunghafte Übergang von dem Maximum $G_+$ zu dem Minimum G, weil der Rissgrund schmal und praktisch ohne Ausdehnung ist. Das Maximum und das Minimum folgend dabei im Bereich des Risses unmittelbar aufeinander. Mathematisch gesehen ist der Verlauf der Oberfläche am Rissgrund nicht differenzierbar, das differenzielle Oberflächenprofil ist damit unstetig oder singulär und genau diese singulären Punkte im differenziellen Oberflächenprofil sind somit eindeutig als Riss im Oberflächenverlauf zu deuten.

Unter Beachtung der Scanrichtung unterscheidet sich ein Riss gemäß Fig. 4 eindeutig von einem schmalen Oberflächengrat gemäß Fig. 5 dadurch, dass im Falle eines Grates die Abfolge zwischen dem Maximum $G_+$ und dem Minimum $G_-$ in der Umgebung des singulären Sprunges im differenziellen Oberflächenprofil gerade umgekehrt ist. Bei dem Grat trifft der Scan von links nach rechts zuerst auf eine ansteigende Flanke, der Abstand zwischen Detektor und Oberfläche wird somit kleiner und • $s_i = s_{i+1} - s_i$ ist somit kleiner als Null. Das Minimum $G_-$ tritt somit zuerst auf. Nach dem Grat trifft der Scan auf eine abfallende Flanke des Grates und • $s_i$ ist somit größer als Null, wobei das Maximum $G_+$ im differenziellen Oberflächenprofil erscheint. Ein scharfer Grat weist somit im differenziellen Oberflächenprofil ein genau entgegengesetztes Charakteristikum auf wie ein Riss, der Verlauf des differenziellen Oberflächenprofils ist aber gleichwohl singulär, d.h. mindestens unstetig.

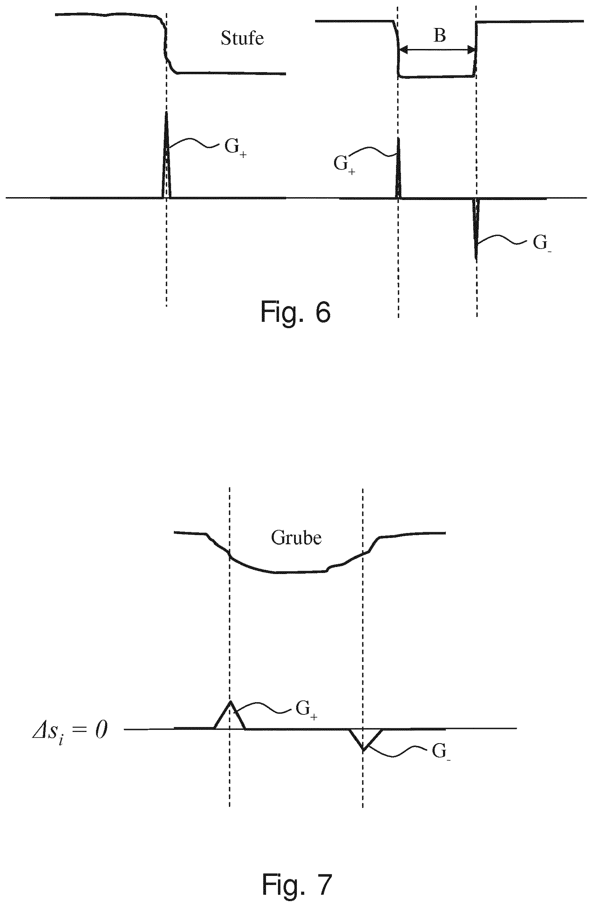

Risse und Grate lassen sich also eindeutig anhand der differenziellen Oberflächenprofile erkennen. Sie unterscheiden sich außerdem von anderen Oberflächeninhomogenitäten wie Stufen, Gräben oder Senken, wie Fig. 6 und Fig. 7 zeigen.

Fig. 6 zeigt links eine Stufe im Verlauf einer Oberfläche und rechts einen ausgedehnten Graben der Breite B. Darunter sind jeweils die dazu gehörenden differenziellen Oberflächenprofile dargestellt. Wie den Diagrammen zu entnehmen ist, zeigt sich die Stufe St in Form eines einzelnen mehr oder weniger scharfen positiven Peaks G$_+$ im differenziellen Oberflächenprofil. Bei dem Graben der Breite B sind zum einen ein positiver Peak G$_+$ und ein negativer Peak G$_-$ zu erkennen, die aber nicht wie beim Riss ineinander übergehen, sondern deutlich voneinander getrennt sind.

Fig. 7 zeigt eine breite Grube der Oberfläche und darunter das entsprechende differenzielle Oberflächenprofil. Bei der Eindellung zeigt sich beim von links nach rechts ausgeführten Scan eine kleines, breit auslaufendes Maximum G$_+$ links, das in der Mitte der Grube verschwindet. Auf der rechten Flanke der Eindellung schließt sich ein flaches Minimum G$_-$ an. Im Gegensatz zu den vorhergehenden Beispielen, bei denen die Oberflächenstrukturen durch eher scharfe und klar abgesetzte Kanten gekennzeichnet waren, und die deswegen zu scharfen Peaks und Sprüngen im differenziellen Oberflächenprofil führen, sind die Strukturen im differenziellen Oberflächenprofil bei der Grube eher flach und verlaufen kontinuierlich und glatt. Dies bildet ein weiteres Entscheidungskriterium zur Beurteilung der Oberflächengüte.

Das erfindungsgemäße Verfahren und Vorrichtungen zum Ausführen der Risserkennung wurden anhand von Ausführungsbeispielen erläutert. Im Rahmen fachmännischen Handelns sind weitere Ausführungsformen und Abwandlungen möglich. Diese ergeben sich insbesondere aus den Unteransprüchen.

Bezugszeichenliste

| | |
|---|---|
| 1 | Abstandsmessvorrichtung |
| 2 | Verschiebevorrichtung |
| 3 | Speichereinheit |
| 4 | Datenverarbeitungseinheit |
| 5 | Anzeigeeinheit |
| 6 | Oberfläche |
| 7 | Matrix aus Abstandsmessvorrichtungen |
| 8 | Spitze |
| 9 | Blattfeder |
| 10 | Absenkmechanik |
| 11 | Detektorvorrichtung, optisch |
| 12 | Riss |
| $x_i$ | Ortskoordinate eines Messpunktes |
| $s_i$ | Abstandswert am jeweiligen Messpunkt |
| $\cdot s_i$ | Differenzwert des aktuellen Abstandswertes zum vorhergehenden Abstandswert |
| $\cdot x_i$ | Abstand der Messpunkte |
| $G_+$ | Maximum im differenziellen Oberflächenprofil |
| $G_-$ | Minimum im differenziellen Oberflächenprofil |

**Patentansprüche**

1. Verfahren zur Erkennung von Oberflächenrissen mit Anwendung einer differenziellen Oberflächenabtastung mit folgenden Verfahrensschritten:

- Ermitteln mindestens eines ersten Abstandssignals zwischen einer Detektorvorrichtung und einer abgetasteten Oberfläche an mindestens einem ersten Messpunkt,
- Ermitteln mindestens eines zweiten Abstandssignals zwischen der Detektorvorrichtung und der abgetasteten Oberfläche an mindestens einem zweiten Messpunkt,
- Bestimmen mindestens eines ortsabhängigen Vergleichswertes zwischen dem ersten Abstandssignal und dem zweiten Abstandssignal in Abhängigkeit von den Ortskoordinaten des ersten und/oder zweiten Messpunktes, wobei eine Unstetigkeit und/oder eine Singularität des ortsabhängigen Vergleichswertes zur Rissdetektion ermittelt wird,

**dadurch gekennzeichnet, dass**

eine Menge ortsabhängiger Vergleichswerte erzeugt wird, wobei aus der Menge der ortsabhängigen Vergleichswerte ein differenzielles Oberflächenprofil erzeugt wird und in dem differenziellen Oberflächenprofil Unstetigkeiten und/oder Singularitäten ermittelt werden, wobei zur Unterscheidung eines Risses von anderen Oberflächeninhomogenitäten, insbesondere einem Grat und/oder einem Graben, die Lage und Form von lokalen Maxima und Minima und die Abfolge zwischen lokalen Maxima und Minima im Bereich der jeweils ermittelten Unstetigkeit und/oder Singularität innerhalb des differenziellen Oberflächenprofils ermittelt und verwendet wird.

2. Verfahren nach Anspruch 1,
**dadurch gekennzeichnet, dass**
das erste und/oder das zweite Abstandssignal durch eine optische und/oder elektromagnetische Abstandsmessung ermittelt wird.

3. Verfahren nach einem der Ansprüche 1 bis 2,
**dadurch gekennzeichnet, dass**
das erste und/oder das zweite Abstandssignal durch eine akustische Abstandsmessung ermittelt wird.

4. Verfahren nach einem der vorhergehenden Ansprüche,
**dadurch gekennzeichnet, dass**
das erste und/oder das zweite Abstandssignal durch eine mechanische Abstandsmessung ermittelt wird.

5. Verfahren nach einem der vorhergehenden Ansprüche,
**dadurch gekennzeichnet, dass**
als ortsabhängiger Vergleichswert ein ortsabhängiger Differenzwert und/oder ein ortsabhängiger Verhältniswert aus den Abstandssignalen bestimmt wird.

6. Verfahren nach einem der vorhergehenden Ansprüche,
**dadurch gekennzeichnet, dass**
die erste und die zweite sowie weitere Ortskoordinaten durch eine mittels einer Verschiebemechanik ausgeführte Relativverschiebung zwischen der abgetasteten Oberfläche und der Detektorvorrichtung eingestellt werden, wobei die Detektorvorrichtung eine punktweise Abtastung ausführt.

7. Verfahren nach einem der vorhergehenden Ansprüche,
**dadurch gekennzeichnet, dass**
die erste und die zweite sowie weitere Ortskoordinaten über eine der abgetasteten Oberfläche gegenüber befindliche Detektorvorrichtung in Form einer linearen oder flächigen Detektormatrix eingestellt werden, wobei die Detektormatrix mehrere punktweise Abtastungen gleichzeitig ausführt.

8. Verfahren nach einem der vorhergehenden Ansprüche,
**dadurch gekennzeichnet, dass**
die differenzielle Oberflächenabtastung durch ein Differenzieren eines von der Abstandsmessvorrichtung während des Abtastvorganges kontinuierlich erzeugten Abstandssignals ausgeführt wird, wobei Unstetigkeiten und/oder Singularitäten im differenzierten Messsignal ausgefiltert und als detektierter Riss ausgegeben werden.

9. Vorrichtung zur Erkennung von Oberflächenrissen, umfassend Mittel für eine differenzielle Oberflächenabtastung mit folgenden Komponenten:

- eine punktweise arbeitende Abstandsmessvorrichtung (1) zum Bestimmen von ortsabhängigen Abstandssignalen
- eine mit der Abstandsmessvorrichtung oder der Oberfläche gekoppelte Verschiebevorrichtung (2) zum Anfahren diskreter und benachbarter Messpunkte auf der Oberfläche,
- eine Vergleichseinheit zum Ermitteln eines Vergleichswertes zwischen einem ersten ortsabhängigen Abstandssignal und einem zweiten ortsabhängigen Abstandssignal bei zwei gegebenen Messpunkten,
- eine Datenverarbeitungseinheit (4) zum Ermitteln einer Unstetigkeit und/oder einer Singularität des ermittelten Vergleichswertes,
- eine Speichereinheit (3) zum Speichern der ortsabhängigen Abstandssignale, der Vergleichswerte und der Ortskoordinaten zum Erzeugen eines differenziellen Oberflächenprofils,

wobei die Datenverarbeitungseinheit (4) und die Speichereinheit (3) zur Unterscheidung eines Risses von anderen Oberflächeninhomogenitäten so konfiguriert sind, dass die Lage und Form von lokalen Maxima und Minima und die Abfolge zwischen lokalen Maxima und Minima im Bereich der jeweils ermittelten Unstetigkeit und/oder Singularität innerhalb des differenziellen Oberflächenprofils ermittelt und verwendet wird.

**10.** Vorrichtung nach Anspruch 9,
**dadurch gekennzeichnet, dass**
die punktweise Abstandsmessvorrichtung (1) in Form einer linearen oder flächenhaften Matrix (7) aus einzelnen gleichzeitig messenden Abstandsmesseinheiten ausgebildet ist.

**11.** Vorrichtung nach einem der Ansprüche 9 bis 10,
**dadurch gekennzeichnet, dass**
die punktweise Abstandsmessvorrichtung (1) eine optische, eine akustische und/oder eine mechanische Abstandsmessvorrichtung ist.

**Claims**

**1.** A method for detecting surface cracks using differential surface scanning, comprising the following steps:

- Determining at least a first distance signal between a detector device and a scanned surface, at least at a first measuring point;
- Determining at least a second distance signal between the detector device and the scanned surface, at least at a second measuring point;
- Determining at least one location dependent comparison value between the first distance signal and the second distance signal as a function of location coordinates of the first and/or second measuring point, wherein a discontinuity and/or a singularity of the location dependent comparison value is determined for crack detection,

**characterized in that**
a set of location independent comparison values is being generated, wherein a differential surface profile is generated from the set of the location dependent comparison values, and
discontinuities and/or singularities are determined in the differential surface profile, wherein a position and shape of local maxima and minima and a sequence between local maxima and minima is determined and used in a portion of the respectively determined discontinuity and/or singularity within the differential surface profile to differentiate a crack from other surface inhomogeneities, in particular a burr or a groove

**2.** The method according to claim 1,
**characterized in that**
the first and/or the second distance signal is determined by an optical and/or electromagnetic distance measurement.

**3.** The method according to one of the claims 1 through 2,
**characterized in that**
the first and/or the second distance signal is determined by an acoustic distance measurement.

**4.** The method according to one of the preceding claims,
**characterized in that**
the first and/or the second distance signal is determined by a mechanical distance measurement.

**5.** The method according to one of the preceding claims,
**characterized in that**
a location dependent differential value and/or a location dependent relative value is determined from the distance signals as the location dependent comparison value.

**6.** The method according to one of the preceding claims,
**characterized in that**
the first and the second location coordinate and additional location coordinates are adjusted by a relative movement that is performed by a linear movement mechanism between the scanned surface and the detector device, wherein the detector device performs a punctiform scanning.

**7.** The method according to one of the preceding claims,
**characterized in that**
the first and the second surface coordinates and additional surface coordinates are adjusted by detector device that is arranged opposite to the scanned surface in a form of a linear or flat detector matrix, wherein the detector matrix performs plural punctiform scans simultaneously.

8. The method according to one of the preceding claims,
**characterized in that**
the differential surface scanning is performed by differentiating a distance signal that is continuously generated by the distance measuring device during the scanning process, wherein discontinuities and/or singularities are filtered out in the differentiated measuring signal and are put out as a detected crack.

9. A device for detecting surface cracks, comprising:
devices configured for differential surface scanning including the following components:

- a distance measuring device (1) that operates punctiform and is configured to determine surface dependent distance signals,
- a linear movement device (2) that is coupled with the distance measuring device or the surface and configured to approach discrete and adjacent measuring points on the surface,
- a comparison unit for determining a comparison value between a first location dependent distance signal and a second location dependent distance signal between two predetermined measuring points,
- a data processing unit (4) configured to determine a discontinuity and/or a singularity of the determined comparison value,
- a storage unit (3) for storing the location dependent distance signals, the comparison values and location coordinates for generating a differential surface profile,

wherein the data processing unit (4) and the storage unit (3) are configured to differentiate a crack from other surface inhomogeneities, so that a position and shape of local maxima and minima and a sequence between the local maxima and minima is determined and used in a portion of a respectively determined discontinuity and/or singularity within the differential surface profile.

10. The method according to claim 9,
**characterized in that**
the punctiform distance measuring device (1) is configured in a form of a linear or surface matrix (7) from individual, simultaneously measuring distance measuring units.

11. The method according to claim 9,
**characterized in that**
the punctiform distance measuring device (1) is an optical, an acoustic, and/or a mechanical distance measuring device.

**Revendications**

1. Procédé pour détecter des fissures en surface en utilisant un balayage de surface différentiel, comprenant les étapes suivantes consistant à :

- déterminer au moins un premier signal de distance entre un dispositif détecteur et une surface balayée à au moins un premier point de mesure,
- déterminer au moins un second signal de distance entre le dispositif détecteur et la surface balayée à au moins un second point de mesure,
- définir au moins une valeur de comparaison dépendante de l'endroit entre le premier signal de distance et le second signal de distance en fonction des coordonnées locales du premier et/ou du second point de mesure, en déterminant une discontinuité et/ou une singularité de la valeur de comparaison dépendante de l'endroit en vue la détection de fissures,

**caractérisé en ce que**
on génère une quantité de valeurs de comparaison dépendantes de l'endroit, et à partir de la quantité des valeurs de comparaison dépendantes de l'endroit on génère un profil de surface différentiel et on détermine des discontinuités et/ou des singularités dans le profil de surface différentiel, et
en vue de distinguer une fissure vis-à-vis d'autres inhomogénéités de surface, en particulier d'une bavure et/ou d'une tranchée, on détermine et on utilise la position et la forme de valeurs maximales et minimales locales et la succession entre les valeurs maximales et minimales locales dans la zone de la discontinuité et/ou singularité respective déterminée à l'intérieur du profil de surface différentiel.

2. Procédé selon la revendication 1,
   **caractérisé en ce que**
   on détermine le premier et/ou le second signal de distance par une mesure télémétrique optique et/ou électromagnétique.

3. Procédé selon l'une des revendications 1 à 2,
   **caractérisé en ce que**
   on détermine le premier et/ou le second signal de distance par une mesure télémétrique acoustique.

4. Procédé selon l'une des revendications précédentes,
   **caractérisé en ce que**
   on détermine le premier et/ou le second signal de distance par une mesure télémétrique mécanique.

5. Procédé selon l'une des revendications précédentes,
   **caractérisé en ce que**
   on définit en tant que valeur de comparaison dépendante de l'endroit une valeur de différence et/ou un ratio dépendant de l'endroit à partir des signaux de distance.

6. Procédé selon l'une des revendications précédentes,
   **caractérisé en ce que**
   on règle la première et la seconde et d'autres coordonnées locales par une translation relative effectuée au moyen d'un mécanisme de translation entre la surface balayée et le dispositif détecteur, le dispositif détecteur effectuant un balayage ponctuel.

7. Procédé selon l'une des revendications précédentes,
   **caractérisé en ce que**
   on règle la première et la seconde et d'autres coordonnées locales par un dispositif détecteur situé en regard de la surface balayée et réalisé sous la forme d'une matrice de détecteur linéaire ou surfacique, la matrice de détecteur effectuant simultanément plusieurs balayages ponctuels.

8. Procédé selon l'une des revendications précédentes,
   **caractérisé en ce que**
   on effectue le balayage de surface différentiel par une différenciation d'un signal de distance généré en continu par le dispositif de mesure télémétrique pendant l'opération de balayage, des discontinuités et/ou des singularités dans le signal de mesure différentiel étant filtrées et émises en tant que fissure détectée.

9. Dispositif pour détecter des fissures en surface, comprenant des moyens pour un balayage de surface différentiel, comprenant les composants suivants :

   - un dispositif de mesure télémétrique (1) opérant ponctuellement pour déterminer des signaux de distance dépendants de l'endroit,
   - un dispositif de translation (2) couplé au dispositif de mesure télémétrique ou à la surface et destiné à desservir des points de mesure discrets et voisins sur la surface,
   - une unité de comparaison pour déterminer une valeur de comparaison entre un premier signal de distance dépendant de l'endroit et un second signal de distance dépendant de l'endroit pour deux points de mesure donnés,
   - une unité de traitement de données (4) pour déterminer une discontinuité et/ou une singularité de la valeur de comparaison déterminée,
   - une unité de mémorisation (3) pour stocker les signaux de distance dépendants de l'endroit, les valeurs de comparaison et les coordonnées locales pour générer un profil de surface différentiel,

   dans lequel, en vue de distinguer une fissure vis-à-vis d'autres inhomogénéités de surface, l'unité de traitement de données (4) et l'unité de mémorisation (3) sont configurées de manière à déterminer et à utiliser la position et la forme de valeurs maximales et minimales locales et la succession entre les valeurs maximales et minimales locales dans la zone de la discontinuité et/ou singularité respective déterminée à l'intérieur du profil de surface différentiel.

**10.** Dispositif selon la revendication 9,
**caractérisé en ce que**
le dispositif de mesure télémétrique ponctuelle (1) est réalisé sous la forme d'une matrice linéaire ou surfacique (7) à partir d'unités télémétriques individuelles mesurant simultanément.

**11.** Dispositif selon l'une des revendications 9 à 10,
**caractérisé en ce que**
le dispositif de mesure télémétrique ponctuelle (1) est réalisé sous la forme d'un dispositif télémétrique optique, acoustique et/ou mécanique.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2216644 A2